# EUROPÄISCHE PATENTSCHRIFT

(11) **EP 1 188 218 B1**
(45) Veröffentlichungstag und Bekanntmachung des Hinweises auf die Patenterteilung: **04.10.2006**
(21) Anmeldenummer: 00943451.5
(22) Anmeldetag: 21.06.2000
(51) Int. Cl.: H02K 16/00, H02K 16/02

(54) **ELEKTRISCHE MASCHINE**
ELECTRIC MOTOR
MOTEUR ELECTRIQUE

(30) Priorität: 21.06.1999 AT 108199; 15.12.1999 AT 211599
(43) Veröffentlichungstag der Anmeldung: 20.03.2002
(73) Patentinhaber: Schrödl, Manfred, 7223 Sieggraben (AT)
(72) Erfinder: Schrödl, Manfred, 7223 Sieggraben (AT)
(74) Vertreter: Krause, Peter
(86) Internationale Anmeldenummer: PCT/AT2000/000167
(87) Internationale Veröffentlichungsnummer: WO 2001/001550

(56) Entgegenhaltungen:
- EP-A- 0 725 474
- EP-A- 0 769 403
- EP-A- 0 800 951
- US-A- 5 461 289
- US-A- 5 650 713
- US-A- 5 804 934

## Beschreibung

Die Erfindung betrifft eine elektrische Maschine, vorzugsweise in Drehstromausführung, wobei eine erste elektrische Maschine vorgesehen ist, die über ihren Rotor mit einer rotierenden Welle einer Maschine, insbesondere einer Verbrennungskraftmaschine, mechanisch verbunden ist und mindestens eine zweite elektrische Maschine vorgesehen ist, die mit ihrem Rotor mit einem rotierenden Teil eines mechanischen Aggregates mechanisch gekuppelt ist, worin die erste elektrische Maschine mit mindestens der zweiten elektrischen Maschine über leistungselektronische Elemente zum Austausch elektrischer Energie auf frei wählbarem Spannungsniveau elektrisch verbunden ist.

Aus der US-A-5 804 934 ist eine elektrische Maschine der eingangs zitierten Art bekannt. Weiters sind auch aus der US-A-5 650 713 und der US-A-5 461 289 Maschinen bekannt, die leistungselektronische Elemente zum Austausch elektrischer Energie zum Gegenstand haben.

Aus der EP-A 769 403 ist ein Hybrid-Antriebssystem bekannt, bei dem eine erste und eine zweite elektrische Maschine vorgesehen sind. Die erste elektrische Maschine ist über ihren Rotor mit einer rotierenden Welle einer Verbrennungskraftmaschine mechanisch verbunden. Die zweite elektrische Maschine ist mit ihrem Rotor mit einem rotierenden Teil eines mechanischen Aggregates, in Form eines Getriebes, mechanisch gekuppelt. In diesem bekannten Hybrid-Antriebssystem wird die erste elektrische Maschine zum Start des Verbrennungsmotors ausgelegt und die zweite elektrische Maschine zur Unterstützung des Antriebsmotors oder dessen Ersatz herangezogen. Beide Maschinen sind an das Batteriespannungsniveau des Hybrid-Antriebssystems gebunden und daher auch nicht optimal auszulegen bzw. zu betreiben. So können sich die großen bzw. überdimensionierten Kupferquerschnitte und auch die hohen Ströme natürlich nachteilig auswirken.

Ferner sind aus der EP-A 725 474 und der EP-A 800 951 Maschinenanordnungen bekannt, wobei beide Maschinen an das Batteriespannungsniveau gebunden sind.

Immer häufiger werden elektrische Maschinen in der Kraftfahrzeugtechnik eingesetzt. So sind Anordnungen, wie beispielsweise das ISAD-System (Integrated Starter-Alternator-Damper System) bekannt, das den Energieaustausch auf Bordspannungsniveau abwickelt.

Ferner sind auch elektrisch betriebene Turbolader bekannt, bei denen ebenfalls der Energieaustausch auf Bordspannungsniveau durchgeführt wird. Dabei wird die Turbolader ― Leistung zur Gänze aus dem Bordnetz entnommen.

Aufgabe der Erfindung ist es, eine elektrische Maschine zu schaffen, die insbesondere in der Kraftfahrzeugtechnik eingesetzt werden kann und die zur Versorgung zweier unterschiedlicher Netze, insbesondere für den Turbolader ausreichende elektrische Energie oder verschiedene Spannungsniveaus zur Verfügung stellt.

Die Aufgabe wird durch die Erfindung gelöst. Die erfindungsgemäße elektrische Maschine ist dadurch gekennzeichnet, dass beide Steuer- und Leistungsteile, die auch die elektronische Leistungsumformung durchführen, miteinander verbunden sind und dass die erste elektrische Maschine und die zweite elektrische Maschine einen internen elektrischen Kreis bilden, wobei der interne elektrische Kreis unabhängig von einem externen elektrischen Kreis, dem so genannten Bordnetz, ist. Mit der Erfindung ist es erstmals möglich einen eigenen, autarken, internen elektrischen Kreis zu schaffen, der unabhängig vom Spannungsniveau des Bordnetzes ist. Damit können die erfindungsgemäße Maschine und die leistungselektronischen Schaltungen mit optimalen Betriebsspannungen ausgelegt werden. Es ist ja bekannt, dass es üblicherweise vorteilhafter ist, mit höheren Spannungen als denen derzeit üblicher Bordnetze elektrische Leistung zu transportieren.

Dieser interne elektrische Teil ist mit der ersten Maschine über leistungselektronische Elemente wie Dioden und Transistoren gemäß dem Stand der Technik entsprechenden Schaltungen verbunden, um damit den internen elektrischen Teil in seinen elektrischen Kenngrößen, wie Spannungen und Ströme und deren zeitliche Verläufe zu gestalten.

Die erste Maschine kann mit dem Verbrennungsmotor mechanisches Drehmoment zu- und abführen, wodurch die erste Maschine bei Leistungsentnahme generatorisch arbeiten kann und diese Energie in Form elektrischer Energie an den internen elektrischen Teil abgibt. Wenn die erste Maschine vom internen elektrischen Teil Energie bezieht, arbeitet sie als Motor und kann dieses Drehmoment beispielsweise zum Starten der Verbrennungskraftmaschine oder zur Unterstützung oder Optimierung im Betrieb verwenden.

Gemäß einem besonderen Merkmal der Erfindung ist die zweite elektrische Maschine mit ihrem Rotor mit dem rotierenden Teil einer Strömungsmaschine verbunden. Diese Weiterbildung kann dazu dienen, dass durch die mechanische Leistung eine Strömungsmaschine, wie beispielsweise ein Turbolader betrieben werden kann, um damit den Vorteil eines verbrennungsmotordrehzahlunabhängigen Betriebes der Strömungsmaschine zu ermöglichen.

Nach einem besonderen Merkmal der Erfindung ist die erste elektrische Maschine mit ihrem Rotor mit einer Kurbelwelle oder einer mit der Kurbelwelle in mechanischer Verbindung stehenden Welle einer Verbrennungskraftmaschine mechanisch verbunden. Dadurch kann in einfachster Weise das mechanische Drehmoment zwischen der ersten elektrischen Maschine und der Verbrennungskraftmaschine ausgetauscht werden.

Gemäß einer Ausgestaltung der Erfindung ist die erste elektrische Maschine mit der Verbrennungskraftmaschine über ein Getriebe mechanisch verbunden.

Auch diese konstruktive Lösung verbessert bei einem elektrisch angetriebenen Turbolader das Drehmoment bei niedrigen Touren.

Nach einer weiteren Ausgestaltung der Erfindung ist die erste elektrische Maschine ein Teil der Verbrennungskraftmaschine, beispielsweise ist der Rotor in der ersten elektrischen Maschine in die Schwungscheibe der Verbrennungskraftmaschine integriert. Der Vorteil dieser konstruktiven Lösung liegt vor allem darin, daß die komplette Anordnung in einer relativ kleinen Bauweise hergestellt werden kann.

Nach einem besonderen Merkmal der Erfindung ist die erste elektrische Maschine mit mindestens einem externen elektrischen Kreis, vorzugsweise einem Bordnetz, verbunden. Diese zweite elektrische Koppelstelle ist über eine leistungselektronische Spannungsanpassschaltung entsprechend dem Stand der Technik mit dem Bordnetz verbunden. Damit kann Leistung zwischen dem internen elektrischen Teil und dem Bordnetz ausgetauscht werden. Damit kann die erste elektrische Maschine der erfindungsgemäßen Anordnung in der einen Energierichtung als Starter und in der anderen Energierichtung als Bordnetzladeeinrichtung betrieben werden.

Gemäß einer weiteren Ausgestaltung der Erfindung sind die erste und die zweite elektrische Maschine in einem Gehäuse angeordnet. Mit dieser Ausgestaltung ist es möglich, ein elektrisches Antriebssystem zu schaffen, das wirtschaftlich hergestellt und eingesetzt werden kann. Vorteilhaft bei dieser Erfindung ist, daß gegenüber bekannten elektromechanischen Antrieben oder rein mechanischen Antrieben, wie Getrieben, bei denen zwei verschiedene, vorzugsweise unabhängige Drehzahlen benötigt werden, wesentliche Teile, wie beispielsweise Gehäuseelemente, Teile der Steuerung eingespart werden können. Weiters können die bekannten EMV-Probleme lokal im Gehäuse gelöst werden und dringen nicht in die Umgebung.

Nach einer Weiterbildung der Erfindung ist bzw. sind die erste und/oder die zweite elektrische Maschine als Asynchron-, Synchron- oder Reluktanzmaschine ausgeführt. Dadurch kann für jeden Anwendungsfall die optimale Maschine gewählt werden.
Nach einem weiteren Merkmal der Erfindung weisen die erste und die zweite elektrische Maschine Rotoren mit gleicher Rotationsachse auf. Gerade in der Kraftfahrzeugtechnik ist es von Vorteil, wenn für eine mechanisch-elektrischmechanische Kupplung nur eine Rotationsachse gegeben ist.

Gemäß einer besonderen Ausgestaltung der Erfindung sind eine der beiden Maschinen als Innenläufer und die andere Maschine als Außenläufer ausgeführt. Auch durch diese Ausgestaltung der Erfindung ist eine kompakte Ausführung der Maschine möglich.

Nach einem weiteren Merkmal der Erfindung weisen die beiden elektrischen Maschinen ein gemeinsames Statorblechpaket auf. Bei dieser Ausgestaltung können in einem Gehäuse ein Stator mit mindestens einer Statorwicklung und mindestens zwei Rotoren vorgesehen sein. Die Rotoren sind mechanisch voneinander getrennt und jeder Rotor steht mit dem elektromagnetisch aktiven Stator in elektromagnetischer Wechselwirkung, wobei die Drehzahlen der Rotoren gleich oder unterschiedlich sind.

Gemäß einer Weiterbildung der Erfindung sind die Komponenten für den elektrischen Energieaustausch zwischen den elektrischen Maschinen und/oder einem externen elektrischen Kreis in einem Gehäuse mindestens einer elektrischen Maschine angeordnet. Diese Weiterbildung trägt vor allem dazu bei, eine elektrische Maschine für die Kraftfahrzeugtechnik zu schaffen, die eine kompakte Bauweise aufweist.

Nach einer weiteren Ausgestaltung der Erfindung weist das Gehäuse mindestens einer elektrischen Maschine eine Flüssigkeitskühlung auf. Dadurch kann die Verlustwärme der Wicklungen, aber auch der leistungselektronischen Elemente, die auf Grund der bekannten Probleme mit den hohen Strömen in der Maschine auftreten kann, optimal abgeführt werden.

Gemäß einem weiteren Merkmal der Erfindung ist vom elektrischen Kreis, der die beiden elektrischen Maschinen verbindet, ein Netzanschluß mit Gleich-, Wechsel- oder Drehspannung ableitbar. In einer dieser Ausgestaltung kann vom internen elektrischen Kreis ein weiteres Dreh-, Wechsel- oder Gleichspannungsnetz zur Verfügung gestellt werden. Beispielsweise kann ein kräftiges 230 V-Netz oder 3x400 V-Netz ausgekoppelt werden, wobei die Frequenz entweder intern oder extern vorgegeben werden kann. Damit wird das Bordnetz und die an ihm angeschlossenen Aggregate über den internen elektrischen Kreis mit diesem Netz energiemäßig verbunden.
Damit kann beispielsweise die Verbrennungskraftmaschine vom Netz gestartet werden, ohne das Bordnetz zu benötigen oder umgekehrt die Verbrennungskraftmaschine ein bestehendes Netz stützen oder aufbauen. Es kann auch die Bordnetzbatterie in einfacher Weise vom Netz geladen werden.

Nach einem besonderen Merkmal der Erfindung weist der Stator mindestens einer elektrischen Maschine mindestens zwei, vorzugsweise in der Maschine galvanisch getrennte, Wicklungssysteme auf, die mit dem Hauptfluß der Maschine magnetisch gekoppelt sind. Mit dieser Ausgestaltung der Erfindung ist es möglich, zwei autarke elektrische Kreise zu schaffen, die ein voneinander unabhängiges Spannungsniveau aufweisen. Ferner ist es ein Vorteil dieser Erfindung, daß elektro-magnetische, also EMV-Störungen durch das Schalten in einem Wicklungssystem in einem anderen Wicklungssystem unterdrückt werden können. So können weiters auch vorteilhaft die einzelnen Wicklungssysteme auf verschiedenen Spannungsniveaus, insbesondere galvanisch trennbar, arbeiten. Eine eigene galvanische Trennung und/oder ein Transformator zur Spannungsanpassung zwischen den beiden beteiligten Stromkreisen wird nicht mehr benötigt.

Gemäß einem besonderen Merkmal der Erfindung sind die mindestens zwei Wicklungssysteme über getrennte leistungselektronische Schaltungen mit jeweiligen, vorzugsweise galvanisch getrennten, Stromkreisen verbunden. Dadurch ist der Vorteil gegeben, daß beispielsweise ein Netz, insbesondere ein Bordnetz, von einem weiteren Netz getrennt betrieben und geregelt werden kann.

Nach einer weiteren Ausgestaltung der Erfindung ist mindestens ein Wicklungssystem über eine Gleichrichterbrücke mit einem Gleichspannungs-oder batteriegestützten Netz, vorzugsweise einem Bordnetz, zum Energieaustausch in einer Richtung verbunden ist. Durch diese Ausgestaltung können wirtschaftlichere, oder auch billigere, leistungselektronische Komponenten zum Laden verwendet werden.

Gemäß einem weiteren Merkmal der Erfindung ist mindestens ein Wicklungssystem über eine Transistorbrücke mit einem Gleichspannungs- oder batteriegestützten Netz, vorzugsweise einem Bordnetz, zum Energieaustausch in beiden Richtungen verbunden. Dadurch ist der Vorteil gegeben, daß auf einen eigenen Starter verzichtet werden kann oder es wird dem einen Netz, vorzugsweise dem Bordnetz Energie entnommen und das andere Netz gespeist.

Nach einem besonderen Merkmal der Erfindung ist mit mindestens einem der Wicklungssysteme die Maschine als Generator zum Laden des angeschlossenen Bordnetzes, sowie auch als Motor, vorzugsweise als Starter einer mechanisch gekoppelten Verbrennungskraftmaschine, betreibbar. Auch bei dieser Ausgestaltung ist der Vorteil gegeben, daß der Starter, aber auch die Lichtmaschine bei der Konzeption in Wegfall geraten können.

Gemäß einer Weiterbildung der Erfindung ist über die mindestens zwei Wicklungssysteme ein galvanisch trennbarer elektrischer Energieaustausch zwischen den an die Wicklungssysteme angeschlossenen Stromkreisen durchführbar. Dadurch ist vorteilhafterweise eine Trennung des Bordnetzes vom zweiten Netz gegeben, das durchaus eine höhere Spannung aufweisen kann.

Nach einer weiteren Ausgestaltung der Erfindung übernehmen die über leistungselektronische steuerbare Schalter angesteuerten Wicklungssysteme die Führung der elektrischen Größen von über leistungselektronische, nicht steuerbare Elemente, vorzugsweise Dioden, gekoppelte Wicklungssysteme. Dabei ist vorteilhaft, daß zur Steuerung des Ladevorganges keine eigenen steuerbaren Elemente notwendig sind, sondern auf die steuerbaren Elemente des zweiten Netzes zurückgegriffen werden kann.

Gemäß einem weiteren Merkmal der Erfindung ist jedes Wicklungssystem galvanisch unabhängig vom jeweiligen anderen Wicklungssystem mit elektromechanischen Funktionsgruppen auf im allgemeinen unterschiedlichen Spannungsebenen verbunden. Dadurch können die elektro-mechanischen Funktionsgruppen, wie eine elektrisch betriebene Ölpumpe oder Wasserpumpe, oder auch eine elektro-magnetisch betriebene Ventilsteuerung, für Ein- und Auslaßventile bzw. Motorventile, aber auch elektrisch betriebene Lüfter unabhängig von der Leistungsbegrenzung der Gleichspannung bzw. der Batterie auf einem vorteilhaften Spannungs- und/oder Stromniveau betrieben werden.

Nach einer besonderen Ausgestaltung der Erfindung ist durch enge magnetische Koppelung von den Wicklungssystemen ein elektromagnetischer Energieaustausch zwischen diesen Wicklungssystemen unabhängig von einer Rotordrehung nach dem Prinzip des Transformators gegeben. Damit ist der Vorteil gegeben, daß auch bei stillstehenden Rotor über eine zeitvariable Spannung durch geeignete leistungselektronische Stellglieder an einem Wicklungssystem ein Energietransport in das relativ eng gekoppelte andere Wicklungssystem möglich ist.

Gemäß einem weiteren Merkmal der Erfindung erfolgt durch schwache magnetische Koppelung von den Wicklungssystemen eine geringe elektromagnetische Beeinflussung der Wicklungssysteme. Dadurch ist der Vorteil gegeben, daß elektro-magnetische Störungen durch Schaltvorgänge in einem Wicklungssystem kaum im anderen Wicklungssystem wirksam werden.

Nach einer Weiterbildung der Erfindung ist durch Steuerung der elektromagnetischen Größen, vorzugsweise der Ströme und Flussverkettungen, mindestens eines Wicklungssystems ein beliebig gestaltbarer elektromechanischer Energieaustausch zwischen den Wicklungssystemen und der Rotorwelle erreichbar. Durch diese Ausgestaltung ist der Vorteil gegeben, daß mechanische und elektrische Energie entsprechend der aktuellen, optimalen Strategie zu Verfügung gestellt wird.

Gemäß einer weiteren Ausgestaltung der Erfindung sind eine erste und eine zweite elektrische Maschine in einem Gehäuse angeordnet. Mit dieser Ausgestaltung ist es möglich, ein elektrisches Antriebssystem zu schaffen, das wirtschaftlich hergestellt und eingesetzt werden kann. Vorteilhaft bei dieser Erfindung ist, daß gegenüber bekannten elektromechanischen Antrieben oder rein mechanischen Antrieben, wie Getrieben, bei denen zwei verschiedene, vorzugsweise unabhängige Drehzahlen benötigt werden, wesentliche Teile, wie beispielsweise Gehäuseelemente, Teile der Steuerung eingespart werden können. Weiters können die bekannten EMV-Probleme lokal im Gehäuse gelöst werden und dringen nicht in die Umgebung.

Nach einer Weiterbildung der Erfindung ist bzw. sind die erste und/oder die zweite elektrische Maschine als Asynchron-, Synchron- oder Reluktanzmaschine ausgeführt. Dadurch kann für jeden Anwendungsfall die optimale Maschine gewählt werden.

Nach einem weiteren Merkmal der Erfindung weisen die erste und die zweite elektrische Maschine Rotoren mit gleicher Rotationsachse auf. Gerade in der Kraftfahrzeugtechnik ist es von Vorteil, wenn für eine mechanisch-elektrischmechanische Kupplung nur eine Rotationsachse gegeben ist.

Die Erfindung wird an Hand von Ausführungsbeispielen, die in der Zeichnung dargestellt sind, näher erläutert.
Fig.1 zeigt eine elektrische Maschine mit Rotoren mit gleicher Rotorachse,
Fig. 2 eine Prinzipskizze der elektrischen Schaltung der Maschine,
Fig. 3 die elektrische Maschine mit den elektronischen Elementen,
Fig. 4 und 5 eine Ausführungsvariante der elektrischen Maschine,
Fig. 6 eine Prinzipskizze einer elektrischen Schaltung der Maschine und
Fig. 7 eine Zusammenschaltung eines Generators mit einem Verdichtermotor über Umrichter.

Einführend sei festgehalten, daß in der beschriebenen Ausführungsform gleiche Teile bzw. Zustände mit gleichen Bezugszeichen bzw. gleichen Bauteilbezeichnungen versehen werden, wobei die in der gesamten Beschreibung enthaltenen Offenbarungen sinngemäß auf gleiche Teile bzw. Zustände mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Weiters können auch Einzelmerkmale oder Merkmalskombinationen aus dem gezeigten Ausführungsbeispielen für sich eigenständige, erfindungsgemäße Lösungen darstellen. Die diesbezüglichen erfindungsgemäßen Aufgaben und Lösungen sind den detaillierten Beschreibungen dieser Figuren zu entnehmen.

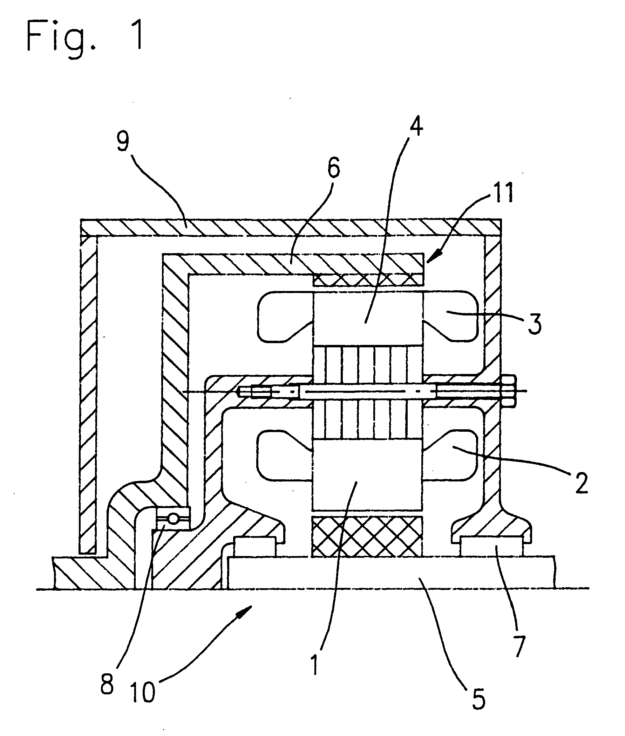

Grundsätzlich sind verschiedene Varianten von derartigen elektrischen Maschinen möglich. Gemäß der Fig. 1 ist eine erste elektrische Maschine 10 mit einem Stator 1 der eine Wicklungen 2 aufweist, dargestellt. Bei der zylinderischen Motoranordnung befindet sich eine Wicklung 2 an der Innenseite des Stators 1 bzw. der Statorbohrung und kann als Nut- oder Luftspaltwicklung ausgeführt sein. Die zweite elektrische Maschine 11 weist eine Wicklung 3 an der Außenseite des Stators 4 als Nut- oder Luftspaltwicklung auf, wobei die Wicklung 2 mit einem als Innenläufer ausgeführten Rotor 5 sowie die Wicklung 3 mit einem als Außenläufer ausgebildeten Rotor 6 zusammenarbeitet. Die Rotoren 5, 6 können mit Permanentmagneterregung, als Käfigläufer, im Reluktanzaufbau, etc. ausgeführt sein. Die beiden Rotoren 5, 6 sind mechanisch über je eine geeignete Lagerung 7, 8 nach dem Stand der Technik im Gehäuse 9 gelagert.

Wie bereits erwähnt, soll das Haupteinsatzgebiet einer derartigen elektrischen Maschine 10, 11 in der Kraftfahrzeugtechnik liegen, wobei diese mehrere Funktionen erfüllen kann. So ist die erste elektrische Maschine 10 mit der Verbrennungskraftmaschine mechanisch gekuppelt, z.B. über ein Getriebe mit der Kurbelwelle oder die erste Maschine 10 befindet sich mit deren Rotor 5 direkt auf einem bestehenden Element des Verbrennungsmotors, wie etwa auf der Kupplungsschwungscheibe oder einem vorhandenen Abtriebsrad oder ist konstruktiv in diesen Teil integriert. Diese erste Maschine 10 kann mit dem Verbrennungsmotor daher mechanisches Drehmoment zu- und abführen, wodurch die erste Maschine 10 bei Leistungsentnahme generatorisch arbeiten kann und diese Energie in Form elektrischer Energie an den internen elektrischen Teil abgibt. Wenn die erste Maschine 10 vom internen elektrischen Teil Energie bezieht, arbeitet sie als Motor und kann dieses Drehmoment zum Starten der Verbrennungskraftmaschine oder zur Unterstützung oder Optimierung im Betrieb verwenden.

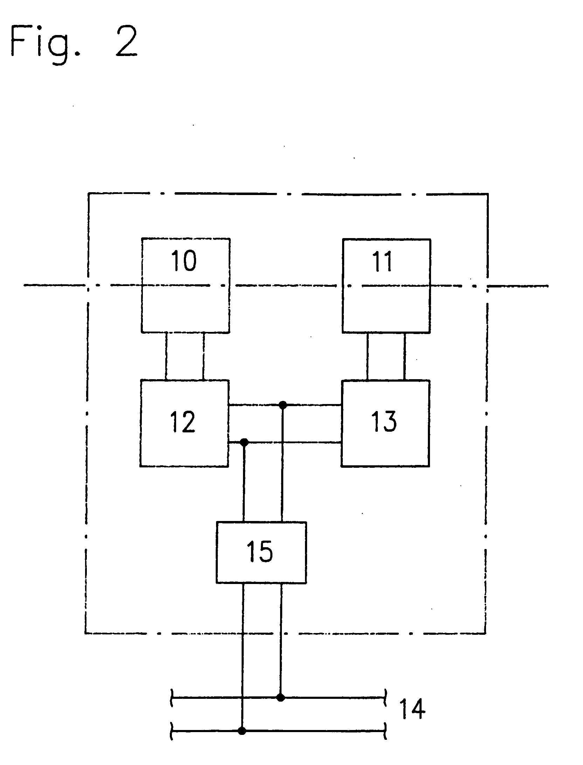

Gemäß der Fig. 2 ist die erste elektrische Maschine 10 sowie die zweite elektrische Maschine 11 jeweils mit einem Steuer- oder Leistungsteil 12, 13 verbunden. Zum Austausch elektrischer Energie auf frei wählbaren Spannungsniveau sind die beiden Steuer- und Leistungsteile 12, 13, die auch die elektronische Leistungsumformung durchführen miteinander verbunden. Dieser interne elektrische Kreis ist mit der ersten Maschine über leistungselektronische Elemente, wie Dioden und Transistoren in dem Stand der Technik entsprechenden Schaltungen verbunden, um damit den internen elektrischen Teil in seinen elektrischen Kenngrößen, wie Spannungen und Ströme und deren zeitliche Verläufe zu gestalten. Ein wichtiges Merkmal dieses internen elektrischen Kreises und damit des Spannungsniveaus der ersten Maschine ist die Unabhängigkeit des Spannungsniveaus von einem externen, elektrischen Kreis, dem sogenannten Bordnetz 14. Damit können die erfindungsgemäßen Maschinen und leistungselektronischen Schaltungen mit optimalen Betriebsspannungen ausgelegt werden. Es ist bekannt, daß es üblicherweise vorteilhafter ist, mit höheren Spannungen als denen derzeit üblicher Bordnetze elektrische Leistung zu transportieren.

Dieses externe Bordnetz 14 ist über einen weiteren Steuer- bzw. Leistungsteil 15 mit dem internen elektrischen Kreis verbunden.

Darin ist auch ein wesentlicher Vorteil dieser Anordnung gegeben, da der mechanischen Energieaustausch zwischen Verbrennungsmotor und einem oder mehreren weiteren Aggregaten wie Turboladern, Pumpen, Lüftern, Kompressoren etc. ohne Verwendung des Bordnetzes abgewickelt werden kann. Neben dem optimalen Spannungsniveau bietet die Anordnung auch ein wesentlich besseres EMV-Verhalten, da die EMV-Störungen durch einfache Maßnahmen entsprechend dem Stand der Technik nicht an das Bordnetz 14 bzw. allgemein in die Umgebung des Aggregats gelangen, sondern nur innerhalb des Aggregats bewältigt werden müssen. Weiters kann mit der Anordnung wesentlich mehr Energie zur Speisung von Hilfsaggragaten als über das Bordnetz drehzahlunabhängig übertragen werden.

Von diesem internen elektrischen Teil, dessen Spannung an den optimalen Betrieb der Anordnung laufend angepaßt werden kann, sofeme die leistungselektronischen Elemente dies ermöglichen, gehen nun eine oder vorzugsweise zwei oder mehrere elektrische Leistungsaustausch-Koppelstellen aus.

Die erste elektrische Koppelstelle geht über leistungselektronische Elemente zum elektrischen Anschluß der zweiten Maschine 11, die elektrische Leistung auf von der ersten Maschine 10 grundsätzlich unabhängigem Drehzahlniveau, in mechanische Leistung umwandeln kann. Diese mechanische Leistung dient in einer bevorzugten Variante dieser Anordnung dazu, eine Strömungsmaschine, wie beispielsweise einen Turbolader zu betreiben, um damit den Vorteil eines verbrennungsmotordrehzahlunabhängigen Betriebes der Strömungsmaschine zu ermöglichen. Gegenüber bekannten elektrisch betriebenen Turboladern weist diese Anordnung ferner den großen Vorteil auf, daß die Turbolader-Leistung nicht notwendigerweise zur Gänze aus dem Bordnetz 14 entnommen wird, sondern ganz oder teilweise über die erste Maschine 10 mit dem Verbrennungsmotor ausgetauscht wird. Dies entlastet das Bordnetz massiv und erlaubt Energieaustausch auf günstigerem elektrischen Spannungsniveau, wodurch die Verkabelung und die leistungselektronischen Komponenten vorteilhafter ausgeführt werden können. Der Leistungsaustausch ist bidirektional möglich. In gleicher Art können weitere elektrische Maschinen als Bestandteil der Erfindung zum Antrieb weiterer Aggregate wie Wasserpumpen, Lüfter, Kompressoren usw. am internen elektrischen Teil angekoppelt sein.

Die zweite elektrische Koppelstelle ist über eine leistungselektronische Spannungsanpaßschaltung entsprechend dem Stand der Technik mit dem Bordnetz verbunden. Damit kann Leistung zwischen dem internen elektrischen Teil und dem Bordnetz 14 ausgetauscht werden. Damit kann die erste elektrische Maschine 10 der Anordnung in der einen Energierichtung als Starter und in der anderen Energierichtung als Bordnetzladeeinrichtung betrieben werden. Der große Vorteil dieses Betriebsmodus ist, daß kein eigener Starter und keine eigene Lichtmaschine nötig sind, weil diese Funktionen von der Anordnung abgedeckt werden. Ein wesentlicher Vorteil gegenüber bekannten Anordnungen ist, daß der Starter nun als Maschine mit optimalem Spannungsniveau ausgelegt und betrieben werden kann, so daß die bekannten Probleme mit hohen Strömen in der Maschine und auch in der an den Maschinensträngen angeschlossenen leistungselektronischen Elementen vermieden werden.

Weiters kann die zweite Maschine 11 über das Bordnetz 14 unabhängig vom Verbrennungsmotor, also etwa auch während dessen Stillstand, betrieben werden. Damit kann beispielsweise der Turbolader im Stillstand der Verbrennungskraftmaschine gestartet werden, um einen besseren Startprozess zu ermöglichen. Gegenüber bekannten Lösungen bietet diese Lösung den Vorteil, daß der zweite Motor und die motornahe Leistungselektronik für ein optimales Spannungsniveau ausgelegt und betrieben werden kann.

In einer weiteren Ausgestaltung kann vom internen elektrischen Kreis ein weiteres Dreh-, Wechsel- oder Gleichspannungsnetz zur Verfügung gestellt werden. Beispielsweise kann ein kräftiges 230 V-Netz oder 3x400 V-Netz ausgekoppelt werden, wobei die Frequenz entweder intern oder extern vorgegeben werden kann. Damit wird das Bordnetz 14 und die an ihm angeschlossenen Aggregate über den internen elektrischen Kreis mit diesem Netz energiemäßig verbunden.

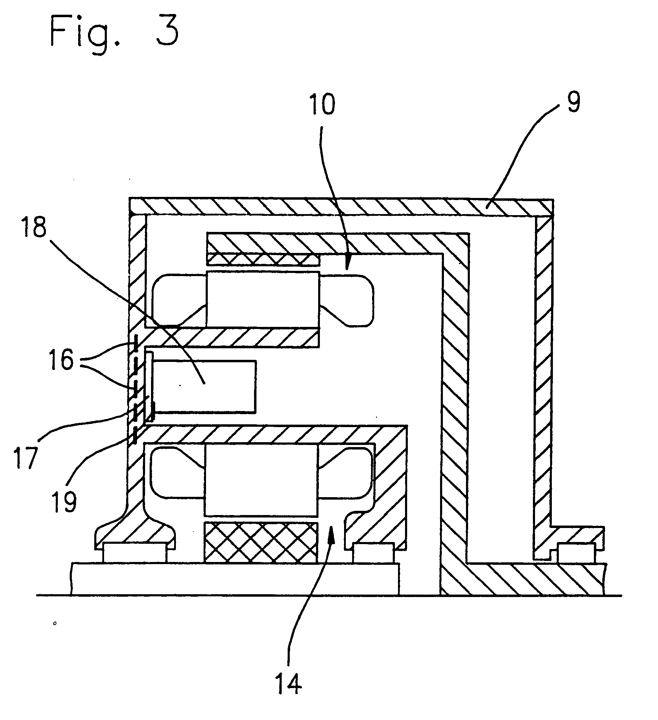

Damit kann beispielsweise die Verbrennungskraftmaschine vom Netz gestartet werden, ohne das Bordnetz zu benötigen oder umgekehrt die Verbrennungskraftmaschine ein bestehendes Netz stützen oder aufbauen. Es kann auch die Bordnetzbatterie in einfacher Weise vom Netz geladen werden. Entsprechend der Fig. 3 ist die erste elektrische Maschine 10 und die zweite elektrische Maschine 11 im Gehäuse 9 angeordnet.

Zur Kühlung kann das Gehäuse 9 Kühlkanäle 16 aufweisen. Zweckmäßigerweise kann im Bereich dieser gut gekühlten Gehäuseteile eine leistungs- und steuerungselektronische Schaltung einschließlich elektrischer, magnetischer und mechanischer Bauteile, wie Halbleiter 19, Kondensatoren 18, Drosseln, Relaise od. dgl. sowie allfälliger Trägermaterialien 17 angeordnet sein, um die Funktionen gemäß den Elementen, wie dem Steuer- und Leistungsteil 12, 13, 15 in Fig. 2, vorteilhaft zu realisieren.

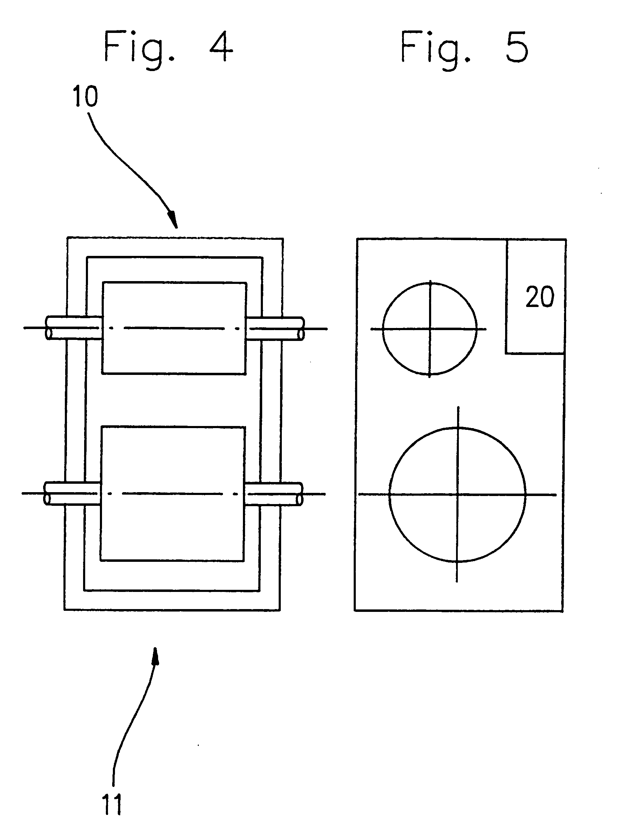

Eine weitere Variante der Bauweise der elektrischen Maschine ist aus der Fig. 4 und der Fig. 5 zu entnehmen. Dabei können die beiden elektrischen Maschinen 10, 11 übereinander angeordnet sein und der Rotorausgang kann bei jeder Maschine links und/oder rechts vorgesehen werden. Dabei kann in diesem Maschinengehäuse auch der elektronische Teil 20 integriert sein.

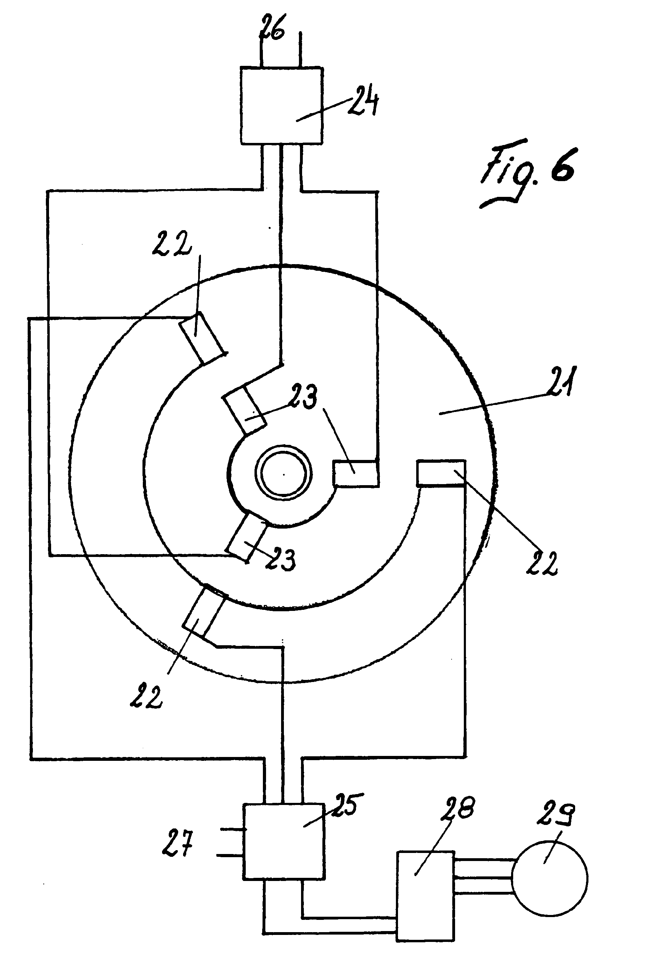

Gemäß der Fig. 6 ist eine elektrische Maschine in Drehstromausführung dargestellt, wobei diese elektrische Maschine die erste oder die zweite elektrische Maschine sein kann. Der Rotor der ersten elektrischen Maschine ist beispielsweise mit einer rotierenden Welle einer Verbrennungskraftmaschine mechanisch verbunden. Der Rotor der zweiten elektrischen Maschine ist mit einem rotierenden Teil, beispielsweise einer Strömungsmaschine, gekuppelt. Zum Austausch elektrischer Energie auf frei wählbaren Spannungsniveau ist die erste elektrische Maschine mit der zweiten elektrischen Maschine elektrisch verbunden.

Der Stator 21 mindestens einer der beiden elektrischen Maschinen weist mindestens zwei Wicklungssysteme 22 bzw. 23 auf. Die beiden Wicklungssysteme 22, 23 sind in der elektrischen Maschine vorzugsweise galvanisch getrennt und sind mit dem Hauptfluß der Maschine magnetisch gekoppelt. Durch die galvanische Trennung, das heißt jedes Wicklungssystem 22, 23 liegt vorzugsweise in seinen eigenen Nuten, können EMV-Störungen durch das Schalten in einem Wicklungssystem 22, 23 unterdrückt werden.

Die beiden Wicklungssysteme 22, 23 sind über getrennte leistungselektronische Schaltungen 24, 25 mit jeweiligen, ebenfalls vorzugsweise galvanisch getrennten, Stromkreisen verbunden. So kann das Wicklungssystem 22 über die leistungselektronische Schaltung 24, beispielsweise einer Gleichrichterbrücke oder mit einer Transistorbrücke mit einem Gleichspannungs- oder battteriegestützten Netz, vorzugsweise mit dem Bordnetz 26, zum Energieaustausch in einer oder beiden Richtungen verbunden sein. Natürlich könnte dieses Wicklungssystem 22 auch als Motor, vorzugsweise als Starter einer Verbrennungskraftmaschine, betreibbar sein.

Über die leistungselektronische Schaltung 25 kann ein Netz 27 gespeist werden. Ebenso ist aber auch diese leistungselektronische Schaltung 25 über das interne Netz mit einem leistungselektronischen Stellglied 28 für die zweite elektrische Maschine 29 elektrisch verbunden sein.

Jedes Wicklungssystem 22, 23 ist galvanisch unabhängig vom jeweiligen anderen Wicklungssystem 22, 23 mit elektro-mechanischen Funktionsgruppen auf im allgemeinen unterschiedlichen Spannungsebenen verbunden. Dadurch können die elektro-mechanischen Funktionsgruppen, wie eine elektrisch betriebene Ölpumpe oder Wasserpumpe, oder auch eine elektro-magnetisch betriebene Ventilsteuerung, für Ein- und Auslaßventile bzw. Motorventile, aber auch elektrisch betriebene Lüfter unabhängig von der Leistungsbegrenzung der Gleichspannung bzw. der Batterie auf einem vorteilhaften Spannungs- und/oder Stromniveau betrieben werden.

Die Wicklungssysteme 22, 23 können eine schwache magnetische Kopplung aufweisen, beispielsweise wenn die Wicklungssysteme in verschiedenen Nuten untergebracht sind, oder auch eine enge magnetische Kopplung aufweisen, wenn beide Wicklungssysteme 22, 23 in einer Nut angeordnet werden.

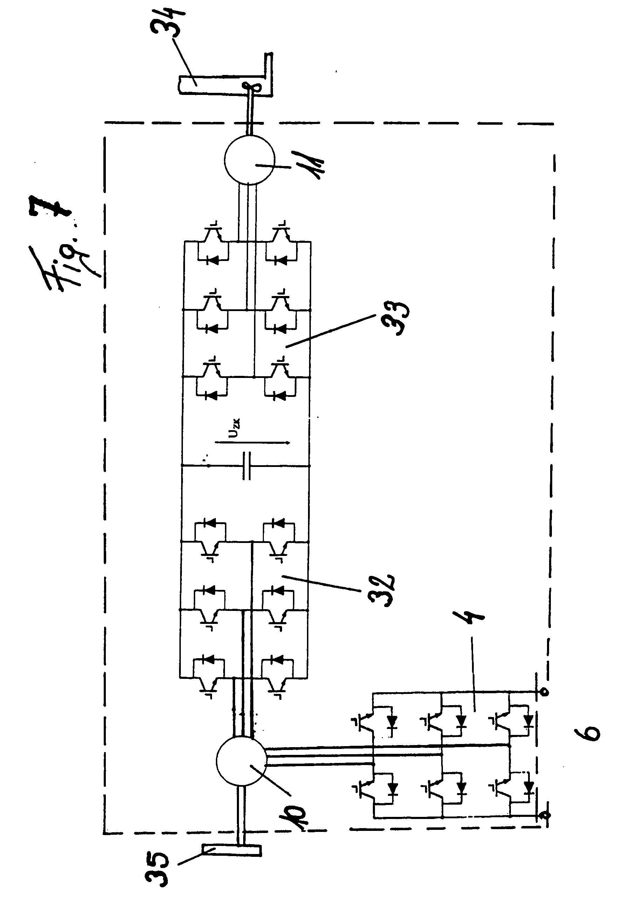

Gemäß der Fig. 7 ist ein Generator, beispielsweise als erste elektrische Maschine 10 und ein Verdichtermotor als zweite elektrische Maschine 11 aufgezeigt. Die beiden elektrischen Maschinen sind über einen Generator-Umrichter 32 und einem Verdichtermotor-Umrichter 33 elektrisch miteinander verbunden. Mit Uzk ist dabei die Zwischenkreisspannung bezeichnet.

Der Generator ist mit seinem Rotor mit einer Maschine, insbesondere einer Brennkraftmaschine über ein Getriebe 35 verbunden. Der Verdichtermotor 31 ist mit seinem Rotor mit einer Strömungsmaschine 34 verbunden. Ein Wicklungssystem 22, 23 ist über eine leistungselektronisches Schaltung 4 mit einem Bordnetz 6 verbunden, wobei die Wicklungssysteme 22, 23 galvanisch trennbar sind.

Dabei könnte die erste und die zweite elektrische Maschine in einem Gehäuse angeordnet sein. Ebenfalls könnte die erste und die zweite elektrische Maschine Rotoren mit gleicher Rotationsachse aufweisen.

Abschließend sei der Ordnung halber darauf hingewiesen, daß in der Zeichnung einzelne Bauteile und Baugruppen zum besseren Verständnis der Erfindung unpropotional und maßstäblich verzerrt dargestellt sind.

## Patentansprüche

1. Elektrische Maschine, vorzugsweise in Drehstromausführung, wobei eine erste elektrische Maschine (10) vorgesehen ist, die über ihren Rotor (5) mit einer rotierenden Welle einer Maschine, insbesondere einer Verbrennungskraftmaschine, mechanisch verbunden ist und mindestens eine zweite elektrische Maschine (11) vorgesehen ist, die mit ihrem Rotor (6) mit einem rotierenden Teil eines mechanischen Aggregates mechanisch gekuppelt ist, worin die erste elektrische Maschine (10) mit mindestens der zweiten elektrischen Maschine (11) über leistungselektronische Elemente zum Austausch elektrischer Energie auf frei wählbarem Spannungsniveau elektrisch verbunden ist, **dadurch gekennzeichnet, dass** beide Steuer- und Leistungsteile (12, 13), die auch die elektronische Leistungsumformung durchführen, miteinander verbunden sind und dass die erste elektrische Maschine (10) und die zweite elektrische Maschine (11) einen internen elektrischen Kreis bilden, wobei der interne elektrische Kreis unabhängig von einem externen elektrischen Kreis, dem so genannten Bordnetz, ist.

2. Elektrische Maschine nach Anspruch 1, **dadurch gekennzeichnet, dass** die zweite elektrische Maschine (11) mit ihrem Rotor (6) mit dem rotierenden Teil einer Strömungsmaschine verbunden ist.

3. Elektrische Maschine nach Anspruch 1 oder 2, **dadurch gekennzeichnet, dass** die erste elektrische Maschine (10) mit ihrem Rotor (5) mit einer Kurbelwelle oder einer mit der Kurbelwelle in mechanischer Verbindung stehenden Welle einer Verbrennungskraftmaschine mechanisch verbunden ist.

4. Elektrische Maschine nach Anspruch 1 oder 2 , **dadurch gekennzeichnet, dass** die erste elektrische Maschine (10) mit der Verbrennungskraftmaschine über ein Getriebe mechanisch verbunden ist.

5. Elektrische Maschine nach Anspruch 1 oder 2 , **dadurch gekennzeichnet, dass** die erste elektrische Maschine (10) ein Teil der Verbrennungskraftmaschine ist, beispielsweise dass der Rotor (5) der ersten elektrischen Maschine (10) in die Schwungscheibe der Verbrennungskraftmaschine integriert ist.

6. Elektrische Maschine nach mindestens einem der Ansprüche 1 bis 5, **dadurch gekennzeichnet, dass** die erste elektrische Maschine (10) mit mindestens einem externen elektrischen Kreis, vorzugsweise einem Bordnetz (14), verbunden ist.

7. Elektrische Maschine nach mindestens einem der Ansprüche 1 bis 6, **dadurch gekennzeichnet, dass** die erste (10) und die zweite elektrische Maschine (11) in einem Gehäuse (9) angeordnet sind.

8. Elektrische Maschine nach mindestens einem der Ansprüche 1 bis 7, **dadurch gekennzeichnet, dass** die erste (10) und/oder die zweite elektrische Maschine (11) als Asynchron-, Synchron- oder Reluktanzmaschine ausgeführt ist bzw. sind.

9. Elektrische Maschine nach mindestens einem der Ansprüche 1 bis 8, **dadurch gekennzeichnet, dass** die erste (10) und die zweite elektrische Maschine (11) Rotoren (5, 6) mit gleicher Rotationsachse aufweisen.

10. Elektrische Maschine nach mindestens einem der Ansprüche 1 bis 9, **dadurch gekennzeichnet, dass** eine der beiden Maschinen (10, 11) als Innenläufer und die andere Maschine als Außenläufer ausgeführt sind.

11. Elektrische Maschine nach mindestens einem der Ansprüche 1 bis 10, **dadurch gekennzeichnet, dass** die beiden elektrischen Maschinen (10, 11) ein gemeinsames Statorblechpaket aufweisen.

12. Elektrische Maschine nach mindestens einem der Ansprüche 1 bis 11, **dadurch gekennzeichnet, dass** die Komponenten für den elektrischen Energieaustausch zwischen den elektrischen Maschinen (10, 11) und/oder einem externen elektrischen Kreis (14) in einem Gehäuse (9) mindestens einer elektrischen Maschine (10, 11) angeordnet sind.

13. Elektrische Maschine nach mindestens einem der Ansprüche 1 bis 12, **dadurch gekennzeichnet, dass** das Gehäuse (9) mindestens einer elektrischen Maschine (10, 11) eine Flüssigkeitskühlung aufweist.

14. Elektrische Maschine nach mindestens einem der Ansprüche 1 bis 13, **dadurch gekennzeichnet, dass** vom elektrischen Kreis, der die beiden elektrischen Maschinen verbindet, ein Netzanschluß mit Gleich-, Wechsel-oder Drehspannung ableitbar ist.

15. Elektrische Maschine nach mindestens einem der Ansprüche 1 bis 14, **dadurch gekennzeichnet, dass** der Stator (1, 4) mindestens einer elektrischen Maschine (10, 11) mindestens zwei, vorzugsweise in der Maschine (10, 11) galvanisch getrennte, Wicklungssysteme (22, 23) aufweist, die mit dem Hauptfluß der Maschine (10, 11) magnetisch gekoppelt sind.

16. Elektrische Maschine nach mindestens einem der Ansprüche 1 bis 15, **dadurch gekennzeichnet, dass** die mindestens zwei Wicklungssysteme (22, 23) über getrennte leistungselektronische Schaltungen (24, 25) mit jeweiligen, vorzugsweise galvanisch getrennten, Stromkreisen verbunden sind.

17. Elektrische Maschine nach mindestens einem der Ansprüche 1 bis 16, **dadurch gekennzeichnet, dass** mindestens ein Wicklungssystem (22, 23) über eine Gleichrichterbrücke mit einem Gleichspannungs- oder batteriegestützten Netz, vorzugsweise einem Bordnetz (26), zum Energieaustausch in einer Richtung verbunden ist.

18. Elektrische Maschine nach mindestens einem der Ansprüche 1 bis 17, **dadurch gekennzeichnet, dass** mindestens ein Wicklungssystem (22, 23) über eine Transistorbrücke mit einem Gleichspannungs- oder batteriegestützten Netz, vorzugsweise einem Bordnetz (26), zum Energieaustausch in beiden Richtungen verbunden ist.

19. Elektrische Maschine nach mindestens einem der Ansprüche 1 bis 18, **dadurch gekennzeichnet, dass** mit mindestens einem der Wicklungssysteme (22, 23) die Maschine als Generator zum Laden des angeschlossenen Bordnetzes (26), sowie auch als Motor, vorzugsweise als Starter einer mechanisch gekoppelten Verbrennungskraftmaschine, betreibbar ist.

20. Elektrische Maschine nach mindestens einem der Ansprüche 1 bis 19, **dadurch gekennzeichnet, dass** über die mindestens zwei Wicklungssysteme (22, 23) ein galvanisch trennbarer elektrischer Energieaustausch zwischen den an die Wicklungssysteme (22, 23) angeschlossenen Stromkreisen durchführbar ist.

21. Elektrische Maschine nach mindestens einem der Ansprüche 1 bis 20, **dadurch gekennzeichnet, dass** die über leistungselektronische steuerbare Schalter angesteuerten Wicklungssysteme (22, 23) die Führung der elektrischen Größen von über leistungselektronische, nicht steuerbare Elemente, vorzugsweise Dioden, gekoppelte Wicklungssysteme (22, 23) übernehmen.

22. Elektrische Maschine nach mindestens einem der Ansprüche 1 bis 21, **dadurch gekennzeichnet, dass** jedes Wicklungssystem (22, 23) galvanisch unabhängig vom jeweiligen anderen Wicklungssystem (22, 23) mit elektromechanischen Funktionsgruppen auf im allgemeinen unterschiedlichen Spannungsebenen verbunden ist.

23. Elektrische Maschine nach mindestens einem der Ansprüche 1 bis 22, **dadurch gekennzeichnet, dass** durch enge magnetische Koppelung von den Wicklungssystemen (22, 23) ein elektromagnetischer Energieaustausch zwischen diesen Wicklungssystemen (22, 23) unabhängig von einer Rotordrehung nach dem Prinzip des Transformators gegeben ist.

24. Elektrische Maschine nach mindestens einem der Ansprüche 1 bis 23, **dadurch gekennzeichnet, dass** durch schwache magnetische Koppelung von den Wicklungssystemen (22, 23) eine geringe elektromagnetische Beeinflussung der Wicklungssysteme (22, 23) erfolgt.

25. Elektrische Maschine nach mindestens einem der Ansprüche 1 bis 24, **dadurch gekennzeichnet, dass** durch Steuerung der elektromagnetischen Größen, vorzugsweise der Ströme und Flussverkettungen, mindestens eines Wicklungssystems (22, 23) ein beliebig gestaltbarer elektromechanischer Energieaustausch zwischen den Wicklungssystemen (22, 23) und der Rotorwelle erreichbar ist.

26. Elektrische Maschine nach mindestens einem der Ansprüche 10 bis 25, **dadurch gekennzeichnet, dass** eine erste und die zweite elektrische Maschine (10, 11) in einem Gehäuse angeordnet sind.

27. Elektrische Maschine nach mindestens einem der Ansprüche 10 bis 26, **dadurch gekennzeichnet, dass** die erste und/oder die zweite elektrische Maschine (10, 11) als Asynchron-, Synchron- oder Reluktanzmaschine ausgeführt ist bzw. sind.

28. Elektrische Maschine nach mindestens einem der Ansprüche 10 bis 27, **dadurch gekennzeichnet, dass** die erste und die zweite elektrische Maschine (10, 11) Rotoren mit gleicher Rotationsachse aufweisen.

## Claims

1. Electric motor, preferably of the three-phase type, whereby a first electric motor (10) is provided, which is mechanically connected via the rotor (5) thereof to a rotating shaft of an engine, especially of an internal combustion engine, and in addition at least one second electric motor (11) is provided, which is mechanically coupled via the rotor (6) thereof to a rotating part of a mechanical aggregate, **characterized by** the fact that the first electric motor (10) is electrically coupled via electronic power elements to at least the second electric motor (11) in order to exchange electric power at a freely selectable voltage level.

2. Electric motor in accordance with Claim 1, **characterized by** the fact that the second electric motor (11) is mechanically connected via the rotor (6) thereof to the rotating part of a turbo engine.

3. Electric motor in accordance with Claim 1 or 2, **characterized by** the fact that the first electric motor (10) is mechanically connected via the rotor (5) thereof to a rotating shaft or to the shaft of a combustion engine mechanically connected to the rotating shaft.

4. Electric motor in accordance with Claim 1 or 2, **characterized by** the fact that the electric motor (10) is mechanically connected via a gearbox to the combustion engine.

5. Electric motor in accordance with Claim 1 or 2, **characterized by** the fact that the first electric motor (10) is a part of the combustion engine, e.g. that the rotor (5) of the first electric motor (10) is integrated in the flywheel of the combustion engine.

6. Electric motor in accordance with at least one of Claims 1 to 5, **characterized by** the fact that the first electric motor (10) is connected to at least one external electric circuit, preferably a machine's mains (14).

7. Electric motor in accordance with at least one of Claims 1 to 6, **characterized by** the fact that the first (10) and second electric motor (11) are mounted in a casing (9).

8. Electric motor in accordance with at least one of Claims 1 to 7, **characterized by** the fact that the first (10) and/or the second electric motor (11) are designed as an asynchronous, synchronous or reluctance motor.

9. Electric motor in accordance with at least one of Claims 1 to 8, **characterized by** the fact that the first (10) and second electric motor (11) have rotors (5, 6) with the same axis of rotation.

10. Electric motor in accordance with at least one of Claims 1 to 9, **characterized by** the fact that one of the two motors (10, 11) is designed as an inner rotor and the other motor is designed as an outer rotor.

11. Electric motor in accordance with at least one of Claims 1 to 10, **characterized by** the fact that the two electric motors (10, 11) have a mutual stator plate package.

12. Electric motor in accordance with at least one of Claims 1 to 11, **characterized by** the fact that the components for electric power exchange between the electric motors (10, 11) and/or an external electric circuit (14) are mounted in a casing (9) with at least one electric motor (10, 11).

13. Electric motor in accordance with at least one of Claims 1 to 12, **characterized by** the fact that the casing (9) of at least one electric motor (10, 11) has a liquid cooling system.

14. Electric motor in accordance with at least one of Claims 1 to 13, **characterized by** the fact that a mains connection with direct current, alternating current or three-phase current can be derived from the electric circuit connecting the two electric motors.

15. Electric motor in accordance with at least one of Claims 1 to 14, **characterized by** the fact that the stator (1, 4) of at least one electric motor (10, 11) has at least two winding systems (22, 23), preferably galvanically separated in the motor (10, 11), that are coupled magnetically with the main flux of the motor (10, 11).

16. Electric motor in accordance with at least one of Claims 1 to 15, **characterized by** the fact that the at least two winding systems (22, 23) are connected via separate electronic power circuits (24, 25) with the relevant, preferably galvanically separated power circuits.

17. Electric motor in accordance with at least one of Claims 1 to 16, **characterized by** the fact that at least one winding system (22, 23) is connected via a rectifier bridge to a direct current or battery-fed mains, preferably a machine's mains (26) for power exchange in one direction.

18. Electric motor in accordance with at least one of Claims 1 to 17, **characterized by** the fact that at least one winding system (22, 23) is connected via a transistor bridge to a direct current or battery-fed mains, preferably a machine's mains (26) for power exchange in both directions.

19. Electric motor in accordance with at least one of Claims 1 to 18, **characterized by** the fact that with at least one of the winding systems (22, 23) the motor can be operated as a generator for charging the connected machine's mains (26) and as a motor, preferably as the starter for a mechanically coupled combustion engine.

20. Electric motor in accordance with at least one of Claims 1 to 19, **characterized by** the fact that via the at least two winding systems (22, 23), a galvanically separable electric power exchange between the circuits connected to the winding systems (22, 23) is possible.

21. Electric motor in accordance with at least one of Claims 1 to 20, **characterized by** the fact that the winding systems (22, 23) controlled via the electronically controlled switches take over the control of the electric parameters from winding systems coupled via non-controllable electronic power elements, preferably diodes.

22. Electric motor in accordance with at least one of Claims 1 to 21, **characterized by** the fact that each winding system (22, 23) is connected, galvanically independent of the other winding system (22, 23), with electromechanical function groups on generally different voltage levels.

23. Electric motor in accordance with at least one of Claims 1 to 22, **characterized by** the fact that an electromagnetic power exchange between the winding systems (22, 23) independent of rotor rotation according to the transformer principle is possible through close magnetic coupling of the winding systems (22, 23).

24. Electric motor in accordance with at least one of Claims 1 to 23, **characterized by** the fact that a slight electromagnetic influence on the winding systems (22, 23) results from weak magnetic coupling of the winding systems (22, 23).

25. Electric motor in accordance with at least one of Claims 1 to 24, **characterized by** the fact that a freely selectable electromagnetic power exchange between the winding systems (22, 23) and the rotor shaft can be achieved by controlling the electromagnetic parameters, preferably the currents and flux linking, of at least one winding system (22, 23).

26. Electric motor in accordance with at least one of Claims 10 to 25, **characterized by** the fact that the first and second electric motor (10, 11) are mounted in a casing.

27. Electric motor in accordance with at least one of Claims 10 to 26, **characterized by** the fact that the first and/or the second electric motor (10, 11) are designed as an asynchronous, synchronous or reluctance motor.

28. Electric motor in accordance with at least one of Claims 10 to 27, **characterized by** the fact that the first and second electric motor (10, 11) have rotors with the same axis of rotation.

## Revendications

1. Machine électrique, de préférence en triphasé, comprenant une première machine électrique (10) connectée par son rotor (5) à l'arbre rotatif d'une machine, notamment un moteur à combustion, et comprenant au moins une deuxième machine électrique (11), couplée mécaniquement par son rotor (6) à une partie rotative d'un ensemble mécanique, dans lequel la première machine électrique (10) est connectée électriquement à au moins la deuxième machine électrique (11) grâce à des éléments électroniques permettant d'échanger l'énergie électrique au niveau de tension choisi librement, **caractérisée par le fait que** les deux baies de commande (12,13), qui contrôlent également la transformation électronique de la puissance, sont connectées l'une à l'autre et que la première machine électrique (10) et la deuxième machine électrique (11) forment un circuit électrique interne, dans lequel le circuit électrique interne est indépendant du circuit électrique externe, appelé réseau d'alimentation de bord.

2. Machine électrique selon la revendication 1, **caractérisée par le fait que** la deuxième machine électrique (11) est connectée à la partie rotative d'une machine produisant du courant grâce à son rotor (6).

3. Machine électrique selon la revendication 1 ou 2, **caractérisée par le fait que** la première machine électrique (10) est raccordée mécaniquement, grâce à son rotor (5), à un vilebrequin ou à un arbre d'un moteur à combustion lui-même raccordé mécaniquement à un vilebrequin.

4. Machine électrique selon la revendication 1 ou 2, **caractérisée par le fait que** la première machine électrique (10) est raccordée mécaniquement au moteur à combustion par un engrenage.

5. Machine électrique selon la revendication 1 ou 2, **caractérisée par le fait que** la première machine électrique (10) constitue une partie du moteur à combustion. Par exemple, le rotor (5) de la première machine électrique (10) est intégré dans le volant moteur du moteur à combustion.

6. Machine électrique selon au moins une des revendications 1 à 5, **caractérisée par le fait que** la première machine électrique (10) est reliée à au moins un circuit électrique externe, de préférence au réseau d'alimentation de bord (14).

7. Machine électrique selon au moins une des revendications 1 à 6, **caractérisée par le fait que** la première (10) et la deuxième machine électrique (11) sont fixées dans un carter.

8. Machine électrique selon au moins une des revendications 1 à 7, **caractérisée par le fait que** la première (10) ou/et la deuxième machine électrique (11) est/sont asynchrone(s), synchrone(s) ou à reluctance.

9. Machine électrique selon au moins une des revendications 1 à 8, **caractérisée par le fait que** la première (10) et la deuxième machine électrique (11) possèdent des rotors (5, 6) ayant le même axe de rotation.

10. Machine électrique selon au moins une des revendications 1 à 9, **caractérisée par le fait qu'**une des deux machines (10, 11) fait fonction de rotor interne et l'autre machine de rotor externe.

11. Machine électrique selon au moins une des revendications 1 à 10, **caractérisée par le fait que** les deux machines électriques (10, 11) possèdent un empilage de tôles magnétiques commun.

12. Machine électrique selon au moins une des revendications 1 à 11, **caractérisée par le fait que** les composants pour l'échange électrique d'énergie entre les machines électriques (10, 11) et/ou un circuit électrique externe (14) sont fixés dans le carter (9) d'au moins une des machines électriques (10, 11).

13. Machine électrique selon au moins une des revendications 1 à 12, **caractérisée par le fait que** le carter (9) d'au moins une des machines électriques (10, 11) possède un circuit de refroidissement par liquide.

14. Machine électrique selon au moins une des revendications 1 à 13, **caractérisée par le fait qu'**une alimentation électrique en courant continu, alternatif ou triphasé est dérivable du circuit électrique qui connecte les deux machines électriques.

15. Machine électrique selon au moins une des revendications 1 à 14, **caractérisée par le fait que** le stator (1, 4) d'au moins une machine électrique (10, 11) comporte au moins deux systèmes d'enroulement (22, 23) de préférence isolés galvaniquement dans la machine (10, 11), et couplés magnétiquement au circuit principal de la machine (10, 11).

16. Machine électrique selon au moins une des revendications 1 à 15, **caractérisée par le fait qu'**au moins deux systèmes d'enroulement (22, 23) sont connectés aux circuits électriques respectifs, de préférence isolés galvaniquement, en passant par des circuits électroniques séparés (24, 25).

17. Machine électrique selon au moins une des revendications 1 à 16, **caractérisée par le fait qu'**au moins un système d'enroulement (22, 23) est connecté à un réseau alimenté en triphasé ou par accumulateur, de préférence un réseau d'alimentation de bord (26), en passant par un pont redresseur afin d'échanger l'énergie dans une direction.

18. Machine électrique selon au moins une des revendications 1 à 17, **caractérisée par le fait qu'**au moins un système d'enroulement (22, 23) est connecté à un réseau alimenté en triphasé ou par accumulateur, de préférence un réseau d'alimentation de bord (26), en passant par un pont de transistors afin d'échanger l'énergie dans les deux directions.

19. Machine électrique selon au moins une des revendications 1 à 18, **caractérisée par le fait que** la machine, ayant au moins un des systèmes d'enroulement (22,23), est exploitable comme générateur pour alimenter le réseau d'alimentation de bord raccordé, ou également comme moteur, de préférence comme démarreur d'un moteur à combustion couplé mécaniquement.

20. Machine électrique selon au moins une des revendications 1 à 19, **caractérisée par le fait qu'**un échange d'énergie électrique isolée galvaniquement entre les circuits électriques raccordés aux systèmes d'enroulement (22,23) est réalisable en passant par au minimum les deux systèmes d'enroulement (22,23).

21. Machine électrique selon au moins une des revendications 1 à 20, **caractérisée par le fait que** les systèmes d'enroulement (22,23), pilotés par un commutateur de puissance réglable électroniquement, régulent les grandeurs électriques des systèmes d'enroulement (22,23) couplés par des éléments de puissance non réglables électroniquement, de préférence des diodes.

22. Machine électrique selon au moins une des revendications 1 à 21, **caractérisée par le fait que** chaque système d'enroulement (22, 23), indépendant galvaniquement des autres systèmes d'enroulement respectifs, est connecté à des groupes fonctionnels électromécaniques, en général à différents niveaux de tension.

23. Machine électrique selon au moins une des revendications 1 à 22, **caractérisée par le fait qu'**un échange d'énergie électromagnétique entre ces systèmes d'enroulement (22,23) s'effectue par un couplage magnétique étroit des systèmes d'enroulement (22,23) indépendamment d'une rotation du rotor selon le principe du transformateur.

24. Machine électrique selon au moins une des revendications 1 à 23, **caractérisée par le fait qu'**un couplage magnétique faible des systèmes d'enroulement (22,23) produit une moindre influence électromagnétique des systèmes d'enroulement (22,23).

25. Machine électrique selon au moins une des revendications 1 à 24, **caractérisée par le fait qu'**un échange d'énergie électromécanique de forme quelconque entre les systèmes d'enroulement (22,23) et l'arbre rotor est réalisable de façon aléatoire grâce au réglage des grandeurs électromagnétiques, de préférence des courants et des enchaînements du flux, d'au moins un système d'enroulement (22,23).

26. Machine électrique selon au moins une des revendications 1 à 25, **caractérisée par le fait que** la première et la deuxième machine électrique (10,11) sont fixées dans un carter.

27. Machine électrique selon au moins une des revendications 1 à 26, **caractérisée par** le fait la première (10) ou/et la deuxième machine électrique (11) est/sont asynchrone(s), synchrone(s) ou à reluctance.

28. Machine électrique selon au moins une des revendications 1 à 27, **caractérisée par le fait que** la première et la deuxième machine électrique (10,11) possèdent des rotors ayant le même axe de rotation.
